# EUROPÄISCHE PATENTSCHRIFT

(11) **EP 2 954 240 B1**
(45) Veröffentlichungstag und Bekanntmachung des Hinweises auf die Patenterteilung: **05.10.2016**
(21) Anmeldenummer: 13789526.4
(22) Anmeldetag: 06.11.2013
(51) Int. Cl.: F16K 11/00, G01F 1/00

(54) **VERTEILERVENTIL MIT INTEGRIERTER DURCHFLUSSMESSEINHEIT**
DISTRIBUTOR VALVE HAVING AN INTEGRATED FLOW METER UNIT
VANNE DE DISTRIBUTION COMPORTANT UNE UNITÉ DÉBITMÉTRIQUE INTÉGRÉE

(30) Priorität: 08.02.2013 DE 102013002118
(43) Veröffentlichungstag der Anmeldung: 16.12.2015
(73) Patentinhaber: Viega GmbH & Co. KG, 57439 Attendorn (DE)
(72) Erfinder: GILLE, Marcel, 57439 Attendorn (DE); RIILI, Nadine, 57368 Lennestadt (DE); SCHMITT, Detlev, 57489 Drolshagen (DE); PILMEIER, Reinhard, 94354 Haselbach (DE); OISCHINGER, Matthias, 94250 Achslach (DE); ROSENTHAL, Jörg, 51580 Reichshof (DE); BUCHNER, Peter, 94327 Bogen (DE); SCHNEIDER, Andreas, 57413 Finnentrop - Schönholthausen (DE)
(74) Vertreter: Cohausz & Florack
(86) Internationale Anmeldenummer: PCT/EP2013/073163
(87) Internationale Veröffentlichungsnummer: WO 2014/121859

(56) Entgegenhaltungen:
- EP-A1- 1 452 837
- EP-A2- 1 688 713
- WO-A1-00/07651
- WO-A1-00/47959
- WO-A1-02/16811
- DE-A1-102009 027 106
- US-A1- 2010 307 611

## Beschreibung

Die vorliegende Erfindung betrifft ein Verteilerventil mit integrierter Durchflussmesseinheit, welches einen von einem Medium in einer Hauptströmungsrichtung durchströmbaren Hauptströmungskanal und einen davon abzweigenden Nebenströmungskanal aufweist, mit einem Verteilerventilgehäuse enthaltend ein Hauptrohr mit einem ersten Leitungsrohranschluss, einem zweiten Leitungsrohranschluss und mindestens einem dazwischen liegenden Abzweig, wobei der Hauptströmungskanal im Hauptrohr vom ersten Leitungsrohranschluss zum zweiten Leitungsrohranschluss verläuft, einen ersten Gehäuseteil zur Aufnahme mindestens eines Ventilkörpers, wobei der Abzweig in den ersten Gehäuseteil mündet und eine Fluidverbindung zwischen dem Hauptrohr und dem ersten Gehäuseteil bildet und wobei der erste Gehäuseteil einen Auslass aufweist, und einen zweiten Gehäuseteil zur Aufnahme eines Durchflussmesskörpers, mit dem Ventilkörper, mit dem Durchflussmesskörper und mit einem dritten Leitungsrohranschluss.

Ein wie zuvor definiertes Verteilerventil ist beispielsweise aus der WO 2009/100930 A1 bekannt. Das bekannte Verteilerventil weist ein mehrteiliges Verteilerventilgehäuse auf, umfassend ein Hauptrohr, einen separaten ersten Gehäuseteil zur Aufnahme eines Ventilkörpers und einen separaten zweiten Gehäuseteil zur Aufnahme eines Durchflussmesskörpers. Der erste Gehäuseteil ist dabei an der Unterseite des Hauptrohrs angeflanscht, wobei eine Fluidverbindung zwischen Hauptrohr und erstem Gehäuseteil besteht. Der zweite Gehäuseteil ist gegenüberliegend an der Oberseite des Hauptrohrs angeflanscht, wobei ebenfalls eine Fluidverbindung zwischen dem Hauptrohr und dem zweiten Gehäuseteil besteht. In dem ersten Gehäuseteil ist ein Ventilkörper und in dem zweiten Gehäuseteil ein Durchflussmesskörper angeordnet. Das Hauptrohr weist einen ersten und einen zweiten Leitungsrohranschluss auf. Ferner ist zwischen den beiden Leitungsrohranschlüssen ein Abzweig vorgesehen, über den die Fluidverbindung zwischen dem Hauptrohr und dem ersten Gehäuseteil hergestellt wird. Schließlich ist ein dritter Leitungsrohranschluss vorgesehen, der Bestandteil des ersten Gehäuseteils ist, in welchem der Ventilkörper angeordnet ist. Bei dem Ventilkörper handelt es sich um eine Regulierspindel, die über eine Hubbewegung die maximale Wassermenge vorgibt, die aus dem dritten Leitungsanschluss austreten soll.

Das zuvor beschriebene Verteilerventil hat einen relativ komplexen Aufbau und weist eine Vielzahl von separaten, miteinander zu verbindenden Bauteilen auf. Entsprechend kompliziert gestaltet sich der Zusammenbau des Verteilerventils. Aufgrund der Vielzahl an Bauteilen ist auch die Fehleranfälligkeit relativ hoch. Darüber hinaus ist das Verteilerventil aufgrund der vielen Gehäuseteile relativ schwer abzudichten.

Aus der EP 0 797 080 A2 ist ferner ein Durchflussregulierventil mit integrierter Durchflussmesseinheit bekannt, welches ein Gehäuse aus einem Hauptrohr und einem ersten Gehäuseteil aufweist, wobei der erste Gehäuseteil sowohl zur Aufnahme des Ventilkörpers als auch zur Aufnahme eines Durchflussmesskörpers dient. Der Ventilkörper ist hier als Regulierküken ausgebildet, welches vollständig durch das Hauptrohr ragt und abhängig von seiner Stellung relativ zum Hauptrohr den Durchfluss zwischen einer Offenstellung und einer Schließstellung regelt.

EP 1 688 713 offenbart ein Verteilerventil gemäß dem Oberbegriff des Anspruch 1.

Ausgehend von dem eingangs genannten Stand der Technik ist es eine Aufgabe der vorliegenden Erfindung, ein Verteilerventil mit einem einfacheren Aufbau zu schaffen.

Die zuvor hergeleitete und aufgezeigte Aufgabe wird durch ein Verteilerventil, insbesondere für ein Fußbodenheizungssystem, mit integrierter Durchflussmesseinheit, gemäß Anspruch 1 gelöst.

Das erfindungsgemäße Verteilerventil zeichnet sich dadurch aus, dass die gesamte Reguliereinheit aus erstem Gehäuseteil und Ventilkörper sowie die gesamte Durchflussanzeigeeinheit aus zweitem Gehäuseteil und Durchflussmesskörper stromabwärts des im Hauptrohr vorgesehenen Abzweigs angeordnet sind. Die Regulierung der Durchflussmenge und die Messung und Anzeige des Volumenstroms erfolgen, also in einem einzigen (gemeinsamen) Nebenströmungskanal, der am Abzweig des Hauptrohrs beginnt. Das Hauptrohr benötigt dadurch nur eine einzige Abzweigöffnung zu einem über eine Durchflussmesseinheit zum zuvor definierten dritten Leitungsanschluss verlaufenden Nebenströmungskanal. Bevorzugt ist im bestimmungsgemäß eingebauten Zustand des Verteilerventils der zweite Gehäuseteil in Schwerkraftrichtung (Richtung der Erdbeschleunigung) unter (hinter) dem ersten Gehäuseteil und/oder Abzweig angeordnet und/oder der dritte Leitungsanschluss in Schwerkraftrichtung unter (hinter) dem zweiten Gehäuseteil und/oder ersten Gehäuseteil und/oder Abzweig angeordnet.

Der Aufbau des erfindungsgemäßen Verteilerventils ist im Vergleich zum Stand der Technik sehr viel einfacher, was auch die Herstellung bzw. den Zusammenbau des Verteilerventils deutlich vereinfacht. Auch ist dieses leichter abzudichten, da vom Hauptrohr nur noch ein Kanal, nämlich besagter Nebenströmungskanal, abzweigt.

Der erste und zweite Leitungsrohranschluss kann jeweils mit einem Leitungssystem und/oder einem oder mehreren weiteren Verteilerventilen verbunden werden. Entsprechend betrifft die vorliegende Erfindung auch eine Verbindungsanordnung, insbesondere ein Leitungssystem, mit einem oder mehreren Verteilerventilen, von denen zumindest ein Verteilerventil erfindungsgemäß ausgebildet ist.

Gemäß einer Ausgestaltung des erfindungsgemäßen Verteilerventils ist das Verteilerventilgehäuse einstückig, das heißt integral, ausgebildet. Mit anderen Worten bestehen die einzelnen Gehäuseteile, das heißt Hauptrohr, erster Gehäuseteil und zweiter Gehäuseteil, aus einem einzigen Stück (die Teile sind nicht voneinander lösbar). Auf diese Weise wird der Aufbau des Verteilerventils noch weiter vereinfacht und das Risiko von Undichtigkeiten minimiert, da zwischen den Gehäuseteilen keine Stellen mehr vorhanden sind, die abgedichtet werden müssen (da die Gehäuseteile integral miteinander verbunden sind).

Insbesondere besteht das Verteilerventilgehäuse und/oder der Ventilkörper und/oder der Durchflussmesskörper aus Kunststoff und wird vorzugsweise von einem Spritzgussteil gebildet. Im Falle eines einstückigen Verteilerventilgehäuses ist dann das gesamte Verteilerventilgehäuse ein zusammenhängendes Spritzgussteil. Im Falle separater Gehäuseteile sind Hauptrohr, erster Gehäuseteil und/oder zweiter Gehäuseteil separate Spritzgussteile. Bevorzugt ist aber wie gesagt die einstückige Ausführung des Verteilerventilgehäuses.

Der Ventilkörper ist insbesondere ein Regulierküken, das heißt ein um eine erste Drehachse drehbarer Körper mit einer radialen Einlassöffnung und einer insbesondere axialen Auslassöffnung.

So ist gemäß einer weiteren Ausgestaltung des erfindungsgemäßen Verteilerventils vorgesehen, dass im ersten Gehäuseteil als Ventilkörper ein Regulierküken zwischen einer Schließstellung und einer Offenstellung um eine erste Drehachse drehbar gelagert ist. In der Schließstellung verschließt das Regulierküken die Verbindung zwischen Hauptrohr und erstem Gehäuseteil, in der Offenstellung ist die Verbindung freigegeben, und zwar derart, dass ein maximaler Durchlassquerschnitt bzw. eine maximale Durchströmung gegeben ist. Zwischen der Schließstellung und der Offenstellung liegen mehrere oder unzählige Zwischenstellungen, die das Regulierküken relativ zum ersten Gehäuseteil einnehmen kann, in welchen der Durchlassquerschnitt und die Durchflussmenge geringer als in der Offenstellung sind.

Der erste Gehäuseteil kann mit mindestens einem Schlitz und/oder mindestens einer Nut zur Aufnahme eines Sicherungselementes, insbesondere einer Sicherungsklammer, versehen sein. Diese/s kann auch aus Kunststoff bestehen. Auch das Regulierküken kann mit mindestens einer Nut zur Aufnahme des Sicherungselements versehen sein. Das Sicherungselement fixiert das Regulierküken im ersten Gehäuseteil in axialer Richtung (gemeint ist die axiale Richtung des ersten Gehäuseteils, auf der auch die erste Drehachse liegt).

Zwischen dem Regulierküken und dem ersten Gehäuseteil kann ein erstes Dichtelement, z.B. ein erster Dichtungsring, angeordnet sein, das/der insbesondere in Umfangsrichtung (Umfangsrichtung des Regulierkükens) verläuft und den ersten Gehäuseteil gegenüber der Umgebung abdichtet. Alternativ oder zusätzlich kann ein Dichtelement bzw. Dichtungsring auch an der Innenseite des ersten Gehäuseteils vorgesehen sein. Zur Aufnahme des jeweiligen Dichtungsrings kann eine Nut im Regulierküken und/oder ersten Gehäuseteil vorgesehen sein.

Ferner kann noch ein weiteres Dichtelement, z.B. ein weiterer Dichtungsring, auf dem Bereich der Oberfläche des Regulierkükens angeordnet sein, das/der in der Schließstellung die Verbindung zum Hauptrohr (den Abzweig) verschließt, so dass kein Medium aus dem Hauptrohr in der Schließstellung des Regulierkükens in den ersten Gehäuseteil gelangen kann.

Die Dichtelemente bzw. Dichtungsringe können sowohl lösbar als auch fest mit dem Regulierküken verbunden sein, wie z.B. von 2-Komponenten-Kunststoffteilen bekannt oder angeklebt, aufvulkanisiert etc. Zusätzlich oder alternativ kann auch das gesamte Regulierküken mit einem insbesondere elastischen Dichtwerkstoff als Dichtelement überzogen bzw. beschichtet sein.

Gemäß noch einer Ausgestaltung des erfindungsgemäßen Verteilerventils weist der erste Gehäuseteil eine Wand mit innenseitig (zumindest bereichsweise) zylindrischer Oberfläche auf, an der das Regulierküken innenseitig anliegt und an der das Regulierküken entlangführbar ist. Diese Wand bzw. die innenseitige zylindrische Oberfläche des ersten Gehäuseteils dient auch zur Abdichtung des Inneren des ersten Gehäuseteils gegenüber der Umgebung, insbesondere unter Verwendung der zuvor beschriebenen Dichtelemente und gegebenenfalls Nuten.

Wie bereits angedeutet, weist gemäß einer weiteren Ausgestaltung das Regulierküken einen Kükenkanal auf, der sich von einer radialen Öffnung im Regulierküken zu einer axialen Öffnung im Regulierküken erstreckt, wobei in der Offenstellung des Regulierkükens die axiale Öffnung im Regulierküken mit dem Auslass des ersten Gehäuseteils und die radiale Öffnung im Regulierküken mit dem Einlass des ersten Gehäuseteils, insbesondere vollständig, fluchtet, d.h. in Überdeckung ist, und in der Schließstellung des Regulierkükens das Regulierküken den Einlass des ersten Gehäuseteils vollständig, das heißt flüssigkeitsdicht verschließt. "Flüssigkeitsdicht" bedeutet, dass bei dem regulären Druck bzw. Prüfdruck im Leitungssystem keine Flüssigkeit durchtreten kann.

Zwischen der Offenstellung und der Schließstellung gibt es wie gesagt Zwischenstellungen, in denen die radiale Öffnung im Regulierküken mit dem Einlass des ersten Gehäuseteils ebenfalls fluchtet, d.h. in Überdeckung ist, wobei dann aber der freie Querschnitt (der Durchlassquerschnitt) kleiner als in der Offenstellung ist, so dass die Durchflussmenge geringer als in der Offenstellung ist.

Die radiale Öffnung im Regulierküken hat einen unrunden (das heißt nicht vollständig kreisförmigen) und/oder asymmetrischen Querschnitt, der sich insbesondere in Umfangsrichtung (Umfangsrichtung des Regulierkükens) zu einer Seite stärker als zur anderen Seite verjüngt.

Die Öffnung weist vorzugsweise einen ersten Abschnitt mit runder Kontur auf, insbesondere einer Kontur, die mindestens einem halben Kreis, bevorzugt mindestens einem 2/3 Kreis, besonders bevorzugt mindestens einem 3/4 Kreis, entspricht, wobei der Durchmesser des Kreises idealerweise dem Durchmesser der Öffnung des ersten Gehäuseteils entspricht, die den Einlass für das aus dem Hauptrohr abzweigbare Medium bildet.

An diesen ersten Abschnitt der Öffnung schließt sich vorzugsweise ein insbesondere im Wesentlichen schlitzförmiger zweiter Abschnitt an, in dem sich die Ränder der Öffnung in Richtung vom ersten Abschnitt zum Ende des zweiten Abschnitts aufeinander zu bewegen. Insbesondere haben die Ränder der Öffnung im zweiten Abschnitt größtenteils oder nahezu vollständig einen geraden Verlauf.

Bevorzugt ist ein Versatz in axialer Richtung des Regulierkükens vorgesehen zwischen dem Mittelpunkt des ersten Abschnitts (im Falle einer runden Kontur also dem Mittelpunkt der runden Kontur des ersten Abschnitts) und dem vorderen Ende der Mittellinie des zweiten Abschnitts. Das vordere Ende der Mittellinie ist definiert als der Punkt, in dem die Mittellinie des zweiten Abschnitts auf die Umfangslinie (bzw. gedachte Kreislinie, auf der die runde Kontur des ersten Abschnitts verläuft) trifft. Dabei ist das vordere Ende der Mittellinie des zweiten Abschnitts insbesondere zu dem Mittelpunkt des ersten Abschnitts in einer zur ersten Drehachse parallelen Richtung versetzt, die von der axialen Öffnung im Regulierküken wegweist. Verläuft also die Drehachse des Regulierkükens im bestimmungsgemäß eingebauten Zustand des Verteilerventils in Schwerkraftrichtung (Richtung der Erdbeschleunigung) und ist der zweite Gehäuseteil in Schwerkraftrichtung hinter (unter) dem ersten Gehäuseteil angeordnet, ist das vordere Ende der Mittellinie des zweiten Abschnitts zu dem Mittelpunkt des ersten Abschnitts entgegen der Schwerkraftrichtung versetzt. Vorzugsweise liegt der gesamte zweite Abschnitt in der zur ersten Drehachse parallelen Richtung, insbesondere der zur ersten Drehachse parallelen und zur axialen Öffnung im Regulierküken weisenden Richtung (im bestimmungsgemäß eingebauten Zustand des Verteilerventils in der Schwerkraftrichtung), vor dem Mittelpunkt des ersten Abschnitts, also oberhalb vom Mittelpunkt des ersten Abschnitts.

Die zuvor beschriebene Anordnung und der Verlauf der Kontur der radialen Öffnung ist dadurch besonders strömungsgünstig ausgebildet. Insbesondere ist die Kontur der radialen Öffnung dadurch strömungsgünstig ausgebildet, dass das Medium, das durch den zweiten (schlitzförmigen) Abschnitt in das Regulierküken einströmt, direkt nach unten zur axialen Öffnung hin umgeleitet wird.

Auf diese Weise wird beim Verdrehen des Regulierkükens von der Schließstellung in Richtung der Offenstellung eine Aufweitung des Durchflussquerschnitts erreicht, die so bemessen ist, dass die Zunahme der Durchflussmenge annähernd proportional zum Drehwinkel ist. Der maximale Drehwinkel des Regulierkükens, also der Drehwinkel zwischen der Schließstellung und der Offenstellung, liegt insbesondere in einem Bereich von 250° bis 290°, bevorzugt in einem Bereich von 260° bis 280°, und beträgt besonders bevorzugt 270°. Der Querschnitt der radialen Öffnung im Regulierküken erstreckt sich insbesondere über mindestens ein Viertel des Umfangs des Regulierkükens, bevorzugt über mindestens ein Drittel des Umfangs des Regulierkükens, besonders bevorzugt über mindestens die Hälfte des Umfangs des Regulierkükens. Der Drehwinkel für die Regulierung, das heißt der Drehwinkel zwischen kleinstem Durchflussquerschnitt (geringst möglicher Durchströmung) und maximalem Durchflussquerschnitt (maximaler Durchströmung), liegt insbesondere in einem Bereich von 130° bis 170°, bevorzugt in einem Bereich von 140° bis 160°, und beträgt besonders bevorzugt 150°.

Gemäß einer weiteren Ausgestaltung des erfindungsgemäßen Verteilerventils ist vorgesehen, dass der Durchflussmesskörper im zweiten Gehäuseteil um eine zweite Drehachse zwischen einer Anfangsstellung und einer Endstellung drehbar gelagert ist. Die Anfangsstellung ist die Position des Durchflussmesskörpers relativ zum zweiten Gehäuseteil, in welcher der Durchflussmesskörper nicht angeströmt wird, da die Verbindung zwischen Hauptrohr und erstem Gehäuseteil geschlossen ist - das Regulierküken befindet sich dann in der Schließstellung. Die Endstellung des Durchflussmesskörpers relativ zum zweiten Gehäuseteil ist die Position, die der maximalen Anströmung bzw. Durchflussmenge entspricht, wenn die Verbindung zwischen Hauptrohr und erstem Gehäuseteil vollständig freigegeben ist - das Regulierküken befindet sich dann in der Offenstellung.

Um den Durchflussmesskörper von dem Medium anströmbar zu gestalten und zwischen der Anfangsstellung und der Endstellung bewegen zu können, weist der Durchflussmesskörper gemäß einer weiteren Ausgestaltung ein in den Nebenströmungskanal ragendes Paddel auf. Bei dem Nebenströmungskanal handelt es sich wie gesagt um den Strömungskanal bzw. Strömungspfad beginnend mit dem Abzweig im Hauptrohr, der sich durch den ersten Gehäuseteil und das Regulierküken sowie durch den zweiten Gehäuseteil bis zum dritten Leitungsrohranschluss, insbesondere dem Anschluss an den Heizkreis, erstreckt. Das Paddel wird in der Anfangsstellung von der Strömung angeströmt bzw. erfasst und dann in Richtung der Endstellung durch einen im zweiten Gehäuseteil gebildeten Abschnitt des Nebenströmungskanals bewegt.

Die Durchflussmesseinheit kann nun wie folgt ausgebildet sein, um eine Anzeige der Durchflussmenge zu ermöglichen.

Gemäß einer Ausgestaltung des Verteilerventils kann der zweite Gehäuseteil mit einer Aufnahme für einen Deckel versehen sein. Entsprechend kann ein Deckel in der Aufnahme vorgesehen sein. Die Aufnahme kann mit einem Innengewinde und der Deckel mit einem korrespondierenden Außengewinde versehen sein und/oder die Aufnahme kann mit einem Außengewinde und der Deckel mit einem korrespondierenden Innengewinde versehen sein. Denkbar wäre auch anstelle einer Gewindeverbindung ein Bajonettverschluss, ein Verschluss mit einem Sicherungsbügel oder dergleichen. Der Deckel kann außenseitig zum Einschrauben in die Aufnahme mit einem Ansatz, insbesondere vertieften Eingriff, für ein Werkzeug, zum Beispiel mit einem Innensechskant oder dergleichen, versehen sein.

Zur Abdichtung des Innern des zweiten Gehäuseteils gegenüber der Umgebung kann zwischen dem Deckel und dem zweiten Gehäuseteil ein drittes Dichtelement, z.B. ein dritter Dichtungsring, vorgesehen sein, das/der in einer Nut im Deckel und/oder zweiten Gehäuseteil gelagert sein kann. Der Deckel und/oder der zweite Gehäuseteil kann zumindest abschnittsweise transparent ausgebildet sein, wobei der transparente Bereich eine Skala aufweist.

Der Durchflussmesskörper kann ferner einen Zeiger aufweisen, der durch den transparenten und mit der Skala versehenen Bereich des Deckels und/oder zweiten Gehäuseteils sichtbar ist. Der Zeiger kann als solcher geformt sein, d.h. eine dreidimensionale Form mit einer Spitze haben, oder durch eine optische Markierung, beispielsweise auf einer Scheibe, gebildet sein.

Bevorzugt ist das Paddel mit dem Zeiger drehfest verbunden und insbesondere einstückig (integral) ausgeführt. Auf diese Weise wird mit einfachen Mitteln eine strömungsbedingte Bewegung des Paddels auf den Zeiger übertragen, wodurch sich anhand der Skala im transparenten Bereich die Stellung des Zeigers relativ zu der Anfangsstellung und der Endstellung ermitteln lässt.

Zwischen dem Paddel und dem Zeiger ist gemäß einer Ausgestaltung des Verteilerventils eine insbesondere rotationssymmetrische Scheibe angeordnet, wobei die Rotationsachse der Scheibe identisch mit der der zweiten Drehachse des Durchflussmesskörpers ist. Insbesondere kann die Scheibe einstückig (integral) mit dem Paddel und/oder dem Zeiger ausgeführt sein. Die Scheibe kann den Nebenströmungskanal im zweiten Gehäuseteil zum Zeiger hin bzw. zu dem Raum im zweiten Gehäuseteil hin, in welchem sich der Zeiger bewegt, abdecken, so dass der Zeiger zwischen der Scheibe und dem transparenten Bereich, beispielsweise dem transparenten Bereich des Deckels, angeordnet und bewegbar ist. Die Scheibe verschließt dabei den Nebenströmungskanal im zweiten Gehäuseteil zumindest insoweit, dass sich Schmutzpartikel nicht in nennenswertem Maße in dem Raum, in welchem sich der Zeiger bewegt, ansammeln können. Besonders bevorzugt lässt die Scheibe aber zu, dass sich der Raum, in welchem sich der Zeiger bewegt, auch mit dem Medium füllen kann. Der Anzeigebereich wird allerdings nicht, zumindest nicht nennenswert, durchströmt. Zwischen dem Nebenströmungskanal im zweiten Gehäuseteil, das heißt dem Strömungsbereich, in welchem sich das Paddel zwischen der Anfangsstellung und der Endstellung bewegen kann, und dem Anzeigebereich, das heißt dem Bereich, in welchem sich der Zeiger bewegen kann, herrscht dabei vorzugsweise der gleiche Druck, das heißt der Durchflussmesskörper ist druckentlastet.

Vorangehend wurde beispielhaft beschrieben, dass der Zeiger des Durchflussmesskörpers in axialer Richtung (axialer Richtung des Durchflussmesskörpers) vom Paddel beabstandet sein kann. Grundsätzlich ist es aber auch denkbar, den Zeiger in axialer Richtung oder auch in radialer Richtung am Paddel vorzusehen. Ist der Zeiger in radialer Richtung am Paddel vorgesehen, beispielsweise in Form einer Markierung, wobei das Paddel den Zeiger auch selbst bilden kann, liegt der transparente Bereich, der die Skala aufweist, vorzugsweise in der insbesondere innenseitig zylindrischen Seitenwand des zweiten Gehäuseteils.

Gemäß noch einer Ausgestaltung des erfindungsgemäßen Verteilerventils ist im zweiten Gehäuseteil eine Feder, insbesondere eine Schenkelfeder, angeordnet, die sich mit einem Ende (Federende) am zweiten Gehäuseteil und mit dem anderen Ende (Federende) am Durchflussmesskörper, insbesondere am Paddel, abstützt und das Paddel entgegen der Strömungsrichtung, die im zweiten Gehäuseteil entlang des Nebenströmungskanals verläuft, mit einer Vorspannung beaufschlagt. Die Vorspannung ist dabei insbesondere so groß, dass das Paddel im nicht-angeströmten Zustand, wenn sich also das Regulierküken in der Schließstellung befindet, in der Anfangsstellung gehalten wird. Wird das Paddel dann angeströmt, prallt das Medium auf das Paddel und übt dort eine Kraft aus, die bewirkt, dass sich das Paddel entgegen der Federkraft durch den Teil des Nebenströmungskanals zwischen der Anfangsstellung und der Endstellung bewegt, und zwar so lange, bis sich ein Gleichgewicht zwischen der vom strömenden Medium auf das Paddel ausgeübten Kraft und der Federkraft einstellt.

Wie bereits zuvor beschrieben, verläuft ein Teil des Nebenströmungskanals durch den zweiten Gehäuseteil. Dieser Teil des Nebenströmungskanals wird im Folgenden als Durchflussmesserströmungskanal bezeichnet.

Gemäß einer weiteren Ausgestaltung des erfindungsgemäßen Verteilerventils weist der zweite Gehäuseteil einen Durchflussmesserströmungskanal auf, der einen ersten, insbesondere geraden, Abschnitt und einen daran angrenzenden zweiten, gebogenen Abschnitt aufweist, wobei das Paddel in der Anfangsstellung des Durchflussmesskörpers am Anfang des zweiten Abschnitts bzw. am Ende des ersten Abschnitts angeordnet ist und im vom Medium angeströmten Zustand um die zweite Drehachse im zweiten Abschnitt in Richtung der Endstellung entlang bewegbar ist. Die Skala zeigt dabei den Drehwinkel an, der proportional zur Durchflussmenge ist. Der Drehwinkel des Paddels um die zweite Drehachse beträgt insbesondere mehr als 90°, bevorzugt mehr als 135° und besonders bevorzugt mehr als 180°. Auf diese Weise kann ein fein abgestufter Messbereich geschaffen werden.

Gemäß noch einer Ausgestaltung erweitert sich der Querschnitt des Durchflussmesserströmungskanals im zweiten Abschnitt von der Anfangsstellung in Richtung der Endstellung, und zwar insbesondere in radialer Richtung (radiale Richtung bezogen auf die zweite Drehachse) und/oder in axialer Richtung (in Richtung der zweiten Drehachse). In letzterem Fall kann der Boden des Durchflussmesserströmungskanals als schiefe Ebene ausgeführt sein, das heißt je weiter sich das Paddel von der Anfangsstellung in Richtung der Endstellung bewegt, um so größer wird ein Spalt zwischen dem Paddel und dem Boden des Durchflussmesserströmungskanals. Diese schiefe Ebene ist bevorzugt so ausgebildet, dass die Drehbewegung des Paddels proportional zur Durchflussmenge ist. Wie gesagt kann sich der Spalt aber auch auf vergleichbare Weise zusätzlich oder alternativ seitlich des Paddels vergrößern, indem die radial äußere Seitenwand des Durchflussmesserströmungskanals keine exakt kreisförmige Kontur in dem Bereich zwischen Anfangsstellung und Endstellung hat, sondern sich von der Anfangsstellung in Richtung der Endstellung weiter von der zweiten Drehachse entfernt, wodurch der Abstand zwischen der radial äußeren Kante des Paddels und der besagten Seitenwand des Durchflussmesserströmungskanals entsprechend größer wird, wenn sich das Paddel von der Anfangsstellung in Richtung der Endstellung bewegt. Die seitliche und untere Begrenzungsfläche könnte auch einen konstanten Spalt zum Paddel bilden. Der Strömungsquerschnitt könnte dann durch eine größer werdende Nut in den Begrenzungsflächen gebildet werden.

Gemäß wiederum einer weiteren Ausgestaltung des erfindungsgemäßen Verteilerventils weist der zweite Gehäuseteil und/oder der Durchflussmesserströmungskanal einen Anschlag für das Paddel und/oder den Zeiger auf, der die Anfangsstellung definiert. Gegen diesen Anschlag wird das Paddel und/oder der Zeiger durch die Vorspannung der Feder gedrückt. In dieser Position zeigt der Zeiger in der Skala vorzugsweise "0" an, das heißt die Durchflussmenge ist null.

Der Durchflussmesserströmungskanal wird gemäß einer Ausgestaltung zur Aufnahme des Deckels hin (bzw. zum Deckel hin) von der Scheibe, insbesondere der rotationssymmetrischen Scheibe, des Durchflussmesskörpers begrenzt. Der der Scheibe gegenüberliegende Boden des Durchflussmesserströmungskanals sowie dessen Seitenwände werden dann insbesondere vom Material des zweiten Gehäuseteils gebildet, sind also einstückig mit dem übrigen zweiten Gehäuseteil ausgeführt.

Gemäß noch einer Ausgestaltung des erfindungsgemäßen Verteilerventils ist vorgesehen, dass die erste Drehachse winkelig, insbesondere senkrecht, zur zweiten Drehachse und/oder die erste Drehachse winkelig, insbesondere senkrecht, zur Hauptströmungsrichtung im Hauptrohr und/oder die zweite Drehachse winkelig, insbesondere senkrecht, zur Hauptströmungsrichtung im Hauptrohr verläuft. Auf diese Weise ergibt sich ein besonders strömungsgünstiger Verlauf.

Der Strömungsverlauf in dem erfindungsgemäßen Verteilerventil ist insbesondere wie folgt:

Befindet sich der Ventilkörper, insbesondere das Regulierküken, in Schließstellung, strömt das gesamte Medium vom ersten Leitungsrohranschluss durch das Hauptrohr am (geschlossenen) Abzweig vorbei zum zweiten Leitungsrohranschluss.

Befindet sich der Ventilkörper, insbesondere das Regulierküken, in einer Stellung, die den Abzweig im Hauptrohr nicht verschließt, insbesondere in Offenstellung oder einer Zwischenstellung, strömt ein Teil des durch das Hauptrohr strömenden Mediums radial aus dem Hauptrohr über den Abzweig in den ersten Gehäuseteil und von da in den Kükenkanal. Im Kükenkanal wird das Medium insbesondere in axialer Richtung (axiale Richtung des Regulierkükens) umgelenkt und strömt in Richtung der ersten Drehachse durch den Auslass des ersten Gehäuseteils zum zweiten Gehäuseteil. Im zweiten Gehäuseteil gelangt das Medium in den Durchflussmesserströmungskanal, wo es auf das Paddel trifft und die Anzeige der Durchflussmenge bewirkt. Das Medium verlässt den zweiten Gehäuseteil schließlich durch den dritten Leitungsanschluss. Von dort kann das Medium in einen Heizkreis geleitet werden.

Das erfindungsgemäße Verteilerventil mit integrierter Durchflussmesseinheit stellt eine deutliche Vereinfachung der Messtechnik dar. Auch gestaltet sich die Montage (das Zusammensetzen) des Verteilerventils einfacher als beim Stand der Technik. Der Zusammenbau ist selbsterklärend und auch von Laien durchführbar, da hier insbesondere nur gesteckt und geschraubt wird. Weniger Bauteile bedeuten auch weniger Fehlerpotential im Betrieb. Der Druckverlust im System wird durch die strömungsoptimierte Form im ersten Gehäuseteil und im zweiten Gehäuseteil ebenfalls gegenüber dem Stand der Technik minimiert. Der transparente Bereich, auch Schauglas genannt, der Durchflussmesseinheit ist weniger anfällig für Verschmutzung, vor allem aufgrund der großen Spaltmaße, was wiederum auch weniger Funktionsausfälle, beispielsweise ein Stillstehen/Festklemmen des Zeigers, zur Folge hat. Auch ist das Verteilerventil gemäß der vorliegenden Erfindung wartungsfrei.

Es gibt nun eine Vielzahl von Möglichkeiten, das erfindungsgemäße Verteilerventil auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1: eine perspektivische Ansicht eines erfindungsgemäßen Verteilerventils,

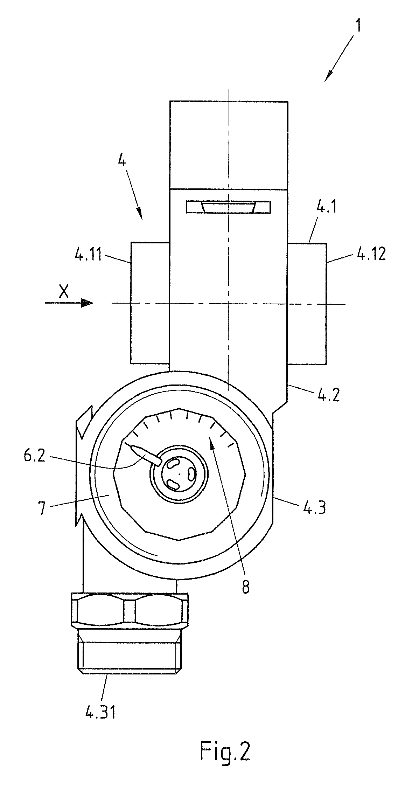

- Fig. 2: eine Seitenansicht des Verteilerventils gemäß Fig. 1,
- Fig. 3a) bis c): Teilschnittansichten des Verteilerventils gemäß Fig. 1,
- Fig. 4a) bis ): Seitenansichten eines Regulierkükens für ein Verteilerventil gemäß Fig. 1,
- Fig. 5a) und b): Schnittansichten einer Durchflussmesseinheit eines Verteilerventils gemäß Fig. 1,
- Fig. 6: eine Schnittansicht der Durchflussmesseinheit aus Fig. 5b) entlang der Schnittlinie VI-VI und
- Fig. 7a) bis d): perspektivische Ansichten verschiedener Ausführungsbeispiele eines Durchflussmesskörpers für ein Verteilerventil gemäß Fig. 1.

Das in den beigefügten Figuren beispielhaft dargestellte Verteilerventil 1 mit integrierter Durchflussmesseinheit weist einen von einem Medium, beispielsweise Wasser, in einer Hauptströmungsrichtung X durchströmbaren Hauptströmungskanal 2 und einen davon abzweigenden Nebenströmungskanal 3 auf.

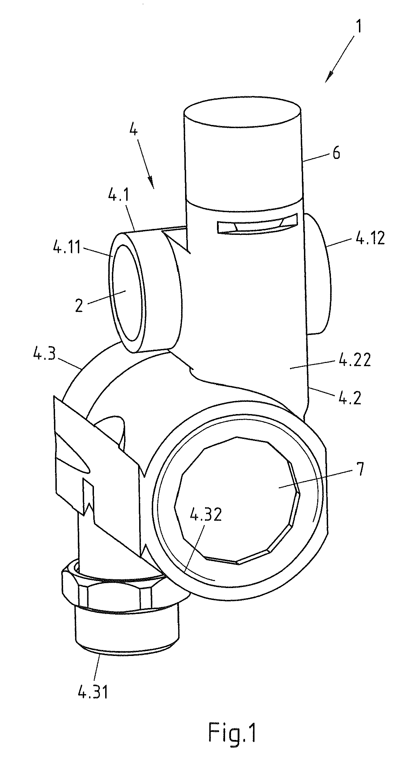

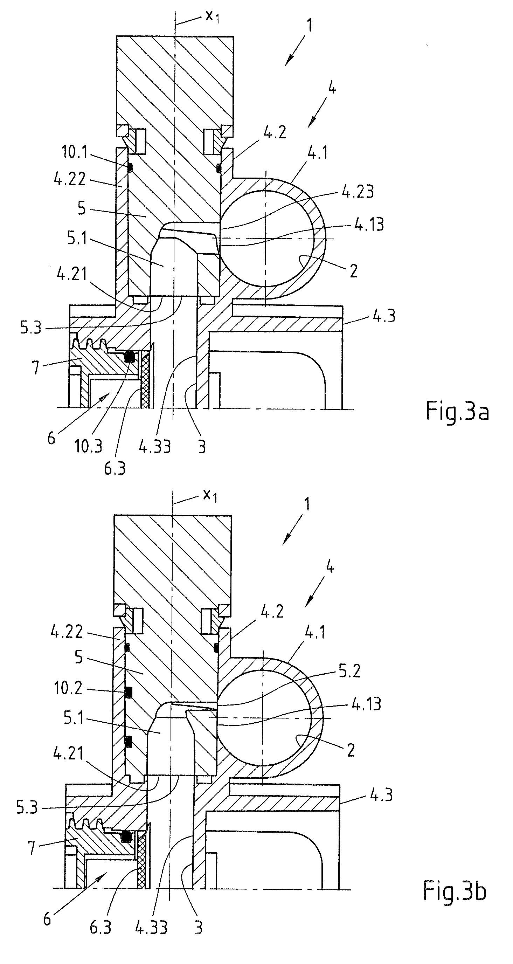

Das Verteilerventil 1 weist ein in Fig. 1 perspektivisch dargestelltes Verteilerventilgehäuse 4 auf enthaltend ein Hauptrohr 4.1 mit einem ersten Leitungsrohranschluss 4.11, einem zweiten Leitungsrohranschluss 4.12 und einem dazwischen liegenden Abzweig 4.13 (siehe Figuren 3a) bis c)), wobei der Hauptströmungskanal 2 im Hauptrohr 4.1 vom ersten Leitungsrohranschluss 4.11 zum zweiten Leitungsrohranschluss 4.12 verläuft. Der erste und zweite Leitungsrohranschluss 4.11 bzw. 4.12 kann jeweils mit einem Leitungssystem und/oder einem oder mehreren weiteren Verteilerventilen verbunden werden. Entsprechend betrifft die vorliegende Erfindung auch eine Verbindungsanordnung, insbesondere ein Leitungssystem, mit einem oder mehreren Verteilerventilen, von denen zumindest ein Verteilerventil 1 erfindungsgemäß ausgebildet ist.

Das Verteilerventilgehäuse 4 enthält ferner einen ersten Gehäuseteil 4.2 zur Aufnahme eines Ventilkörpers 5, wobei der Abzweig 4.13 in den ersten Gehäuseteil 4.2 mündet (Fig. 3a) bis c)) und eine Fluidverbindung zwischen dem Hauptrohr 4.1 und dem ersten Gehäuseteil 4.2 bildet und wobei der erste Gehäuseteil 4.2 einen Auslass 4.21 (Figuren 3a) bis c)) aufweist. Der erste Gehäuseteil 4.2 ist hier tangential außen am Hauptrohr 4.1 angeordnet.

Ferner enthält das Verteilerventilgehäuse 4 einen zweiten Gehäuseteil 4.3 zur Aufnahme eines Durchflussmesskörpers 6. Der Auslass des ersten Gehäuseteils 4.2 mündet in den zweiten Gehäuseteil 4.3 (Figuren 3a) bis c)), wodurch eine Fluidverbindung zwischen dem ersten Gehäuseteil 4.2 und dem zweiten Gehäuseteil 4.3 gebildet wird. Der zweite Gehäuseteil weist wiederum einen Auslass auf, der einen dritten Leitungsanschluss 4.31 bildet und beispielsweise zum Anschluss an einen Heizkreis dient.

Das Verteilerventil 1 ist so aufgebaut, dass der Nebenströmungskanal 3 vom Abzweig 4.13 des Hauptrohrs 4.1 zum Auslass 4.31 des zweiten Gehäuseteils 4.3 verläuft. Der Nebenströmungskanal 3 zweigt damit vom Hauptströmungskanal 2 ab.

Wie zuvor angedeutet, ist das Verteilerventilgehäuse 4 aus dem Hauptrohr 4.1, dem ersten Gehäuseteil 4.2 und dem zweiten Gehäuseteil 4.3 einschließlich der Leitungsrohranschlüsse 4.11, 4.12 und 4.31 einstückig ausgebildet und bildet insbesondere ein Spritzgussteil aus Kunststoff.

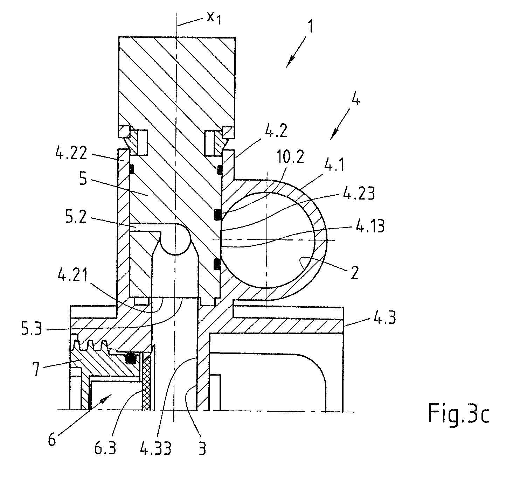

Wie die Figuren 3a) bis c) zeigen, ist im ersten Gehäuseteil 4.2 als Ventilkörper ein Regulierküken 5, hier ein Bauteil mit einer im Wesentlichen zylinderförmigen Außenkontur, um eine erste Drehachse x₁ zwischen einer Offenstellung (Fig. 3a)) und einer Schließstellung (Fig. 3c)) drehbar gelagert. Zwischen der Offenstellung und der Schließstellung gibt es Zwischenstellungen, von denen eine in Fig. 3b) dargestellt ist und bei denen ein geringerer Durchfluss des Mediums vom Hauptrohr 4.1 in den ersten Gehäuseteil 4.2 als in der Offenstellung vorhanden ist.

Wie die Figuren 3a) bis c) zeigen, ist ein erstes Dichtelement, hier beispielhaft in Form eines ersten Dichtungsrings 10.1, insbesondere O-Rings, oberhalb des Abzweigs 4.13 und des Einlasses 4.23 zwischen dem ersten Gehäuseteil 4.2 und dem Regulierküken 5 über den Umfang des Regulierkükens 5 umlaufend angeordnet. Dieser dichtet das Innere des ersten Gehäuseteils 4.2 gegenüber der Umgebung ab.

Ein zweites Dichtelement, hier beispielhaft in Form eines zweiten Dichtungsrings 10.2, umgibt eine Stelle des Umfangs des Regulierungskükens 5, die in der Schließstellung (Fig. 3c)) den Abzweig 4.13 und den Einlass 4.23 verschließt.

Der erste Gehäuseteil 4.2 weist, wie die Figuren 3a) bis c) zeigen, eine Wand 4.22 auf, die innenseitig zumindest bereichsweise eine zylindrische Oberfläche hat. An dem zylindrischen Teil der Wand 4.22 liegt das Regulierküken 5 innenseitig an und ist relativ zu dieser bewegbar bzw. an dieser entlangführbar.

Die Wand 4.22 weist eine Öffnung 4.23 auf, die den Einlass 4.23 für das aus dem Hauptrohr 4.1 abgezweigte Medium bildet. Die Öffnung 4.23 ist bei dem vorliegenden Ausführungsbeispiel identisch mit der Öffnung 4.13, die hier den Abzweig aus dem Hauptrohr 4.1 bildet.

Das Regulierküken 5 weist ferner einen Kükenkanal 5.1 auf, der sich von einer radialen Öffnung 5.2 im Regulierküken 5 zu einer axialen Öffnung 5.3 im Regulierküken erstreckt. Zumindest in der Offenstellung, bevorzugt auch in der Schließstellung, des Regulierkükens 5 fluchtet die axiale Öffnung 5.3 mit dem Auslass 4.21 des ersten Gehäuseteils 4.2. Die radiale Öffnung 5.2 fluchtet in der Offenstellung mit dem Einlass 4.23. In der Schließstellung verschließt das Regulierküken 5 den Einlass 4.23 des ersten Gehäuseteils 4.2 flüssigkeitsdicht.

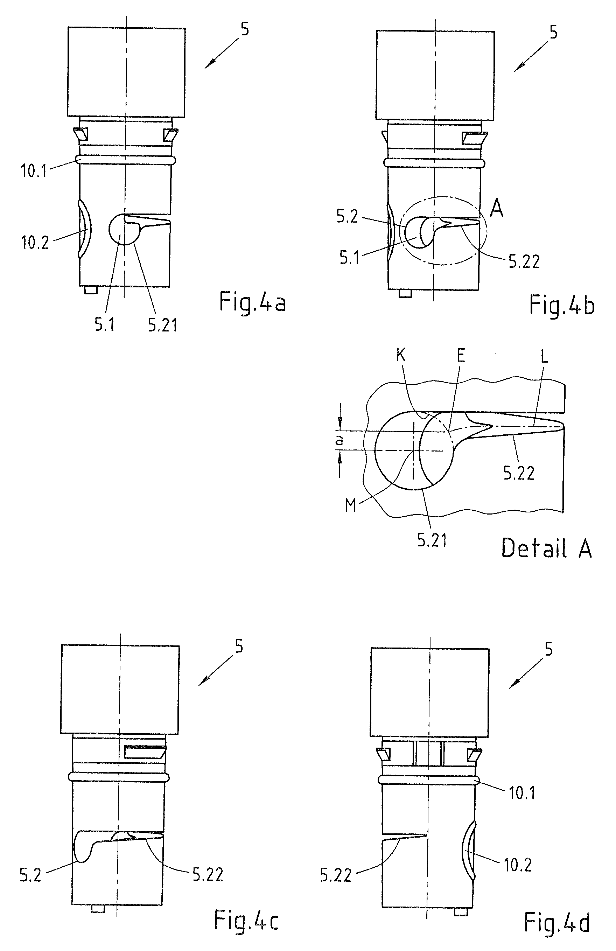

Wie die Figuren 4a) bis d) zeigen, hat die radiale Öffnung 5.2 des Regulierkükens 5 einen nicht vollständig kreisförmigen und gleichzeitig asymmetrischen Querschnitt, der sich in der Richtung des Umfangs des Regulierkükens 5 zu einer Seite stärker als zur anderen Seite verjüngt. Die radiale Öffnung 5.2 weist einen ersten Abschnitt 5.21 mit einer runden Kontur auf, die ungefähr einem 3/4 Kreis entspricht, dessen Durchmesser im Wesentlichen identisch mit dem Durchmesser der Öffnung 4.23 des ersten Gehäuseteils 4.2 ist. An den ersten Abschnitt 5.21 grenzt ein zweiter Abschnitt 5.22 an, der schlitzförmig ausgebildet ist und in dem sich die Ränder der Öffnung 5.2 in Richtung vom ersten Abschnitt 5.21 zum Ende des zweiten Abschnitts 5.22 gerade aufeinander zu bewegen. Der Querschnitt der radialen Öffnung 5.2 im Regulierküken 5 erstreckt sich über etwa die Hälfte des Umfangs des Regulierkükens 5, was die Figuren 4a) und d) veranschaulichen.

Im dargestellten Fall (siehe "Detail A" von Fig. 4b)) besteht ein Versatz a in axialer Richtung des Regulierkükens 5 bzw. in dazu paralleler Richtung zwischen dem Mittelpunkt M des ersten Abschnitts 5.21 (hier also dem Mittelpunkt M der Kreislinie K, auf der die runde Kontur des ersten Abschnitts 5.21 verläuft) und dem vorderen Ende E der Mittellinie L des zweiten Abschnitts 5.22. Das vordere Ende E der Mittellinie L ist definiert als der Punkt, in dem die Mittellinie L des zweiten Abschnitts 5.22 auf die Kreislinie K, auf der die runde Kontur des ersten Abschnitts 5.21 verläuft, trifft. Dabei ist das vordere Ende E der Mittellinie L zu dem Mittelpunkt M des ersten Abschnitts 5.21 in einer Richtung versetzt, die von der axialen Öffnung 5.3 im Regulierküken 5 wegweist und parallel zur Drehachse x₁ verläuft. Verläuft also die Drehachse x₁ des Regulierkükens 5 im bestimmungsgemäß eingebauten Zustand (Fig. 1) des Verteilerventils 1 in Schwerkraftrichtung und ist wie im vorliegenden Ausführungsbeispiel der zweite Gehäuseteil 4.3 in Schwerkraftrichtung hinter (unter) dem ersten Gehäuseteil 4.2 angeordnet, ist das vordere Ende E der Mittellinie L zu dem Mittelpunkt M entgegen der Schwerkraftrichtung versetzt. Im gezeigten Ausführungsbeispiel liegt sogar der gesamte zweite Abschnitt 5.22 in der zur ersten Drehachse x₁ parallelen und zur axialen Öffnung 5.3 weisenden Richtung (im bestimmungsgemäß eingebauten Zustand des Verteilerventils hier in der Schwerkraftrichtung) vor dem Mittelpunkt M des ersten Abschnitts 5.21, also oberhalb vom Mittelpunkt M des ersten Abschnitts 5.21.

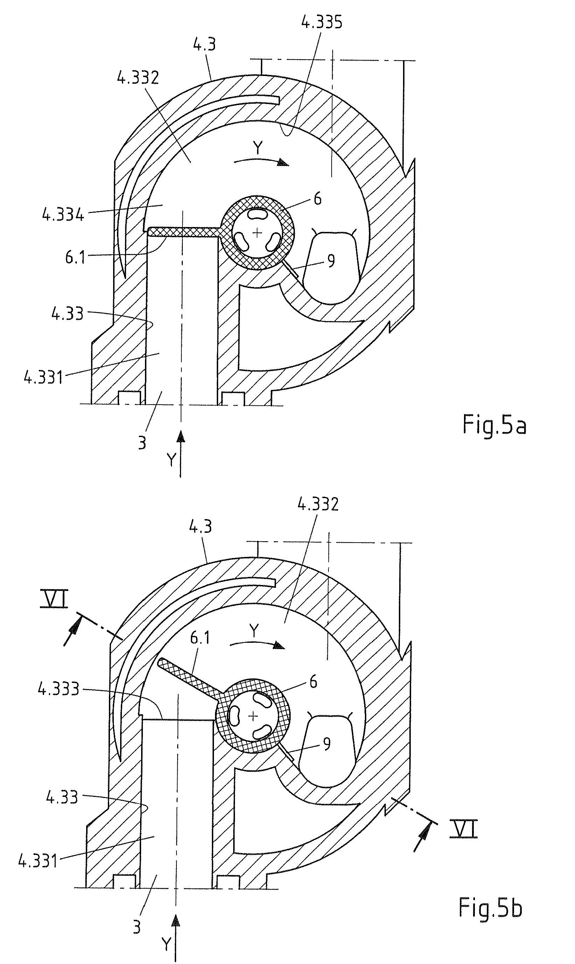

Die Figuren 5a), 5b) und 6 zeigen die integrierte Durchflussmesseinheit des Verteilerventils 1. So ist erfindungsgemäß im zweiten Gehäuseteil 4.3 ein Durchflussmesskörper 6 mit einem Paddel 6.1, einem in axialer Richtung davon beabstandeten Zeiger 6.2 und einer zwischen Paddel 6.1 und Zeiger 6.2 angeordneten rotationssymmetrischen Scheibe 6.3 vorgesehen. Der Durchflussmesskörper 6 ist um eine zweite Drehachse x₂ (die die axiale Richtung definiert) zwischen einer Anfangsstellung (Fig. 5a)) und einer Endstellung drehbar gelagert. Fig. 5b) zeigt eine Zwischenstellung, bei der eine teilweise Durchströmung des zweiten Gehäuseteils 4.3 mit dem Medium erfolgt.

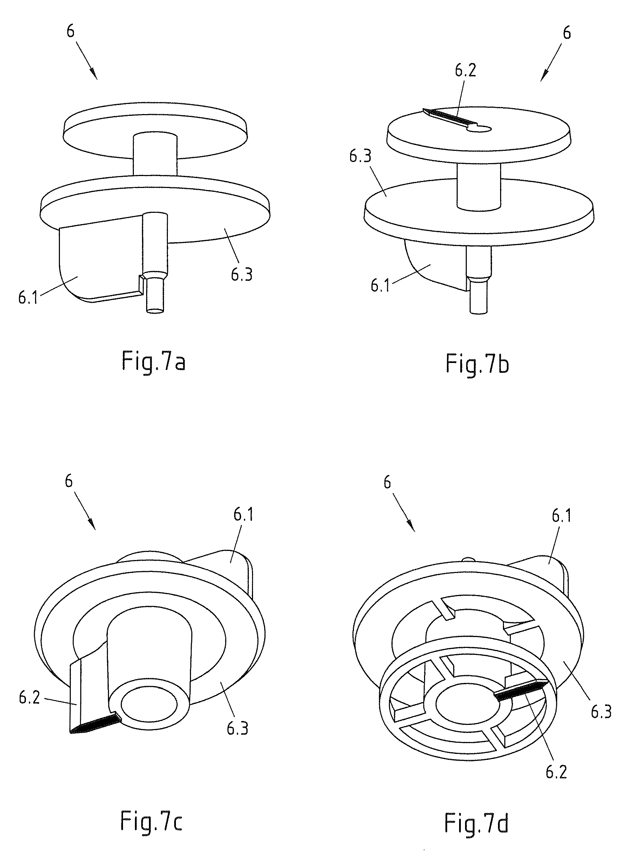

Wie die Figuren 7a) bis d) zeigen, sind Paddel 6.1, Zeiger 6.2 und Scheibe 6.3 drehfest und einstückig miteinander verbunden. Fig. 7c) zeigt dabei ein Ausführungsbeispiel eines Durchflussmesskörpers 6, wie er im Beispiel der Figuren 5a) bis 6 vorgesehen ist. Die Figuren 7a), b) und d) zeigen alternative Ausführungsbeispiele eines Durchflussmesskörpers 6.

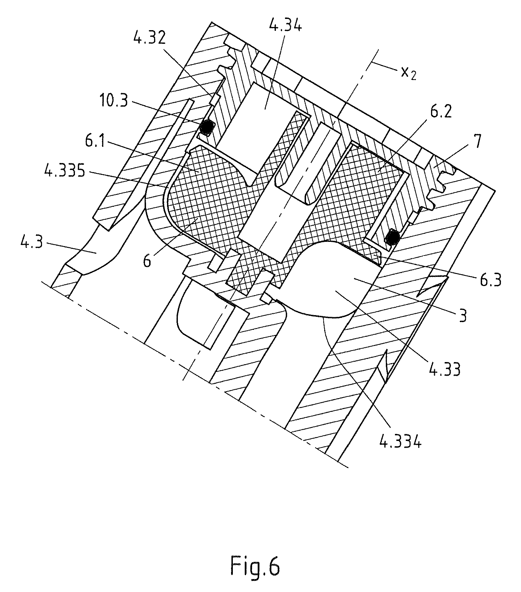

Wie Fig. 6 und teilweise auch die Figuren 3a) bis c) zeigen, ist der zweite Gehäuseteil 4.3 mit einer Aufnahme 4.32 für einen Deckel 7 versehen, wobei der hier eingesetzte Deckel 7 über ein Außengewinde und die Aufnahme 4.32 über ein korrespondierendes Innengewinde verfügt. Zwischen Deckel 7 und Aufnahme 4.32 ist ein drittes Dichtelement, hier beispielhaft in Form eines dritten Dichtungsrings 10.3, angeordnet, das/der das Innere des zweiten Gehäuseteils 4.3 gegenüber der Umgebung abdichtet.

Wenn in der vorliegenden Beschreibung von "Abdichten" die Rede ist, ist immer eine flüssigkeitsdichte Abdichtung gemeint, die zumindest so dicht ist, dass bei dem normalen Prüfdruck in einem Leitungssystem, beispielsweise einer Fußbodenheizung, kein Medium an den Dichtstellen austreten kann.

Der Deckel 7 ist abschnittsweise transparent ausgebildet, wobei der transparente Bereich eine Skala 8 aufweist. Wird das Paddel 6.1 vom Medium angeströmt, bewegt es sich zwischen der Anfangsstellung und der Endstellung und überträgt die Bewegung gleichzeitig auf den Zeiger 6.2, der durch den transparenten Bereich erkennbar ist und auf der Skala 8 den Wert anzeigt, der der Durchflussmenge zu diesem Zeitpunkt entspricht.

Im zweiten Gehäuseteil 4.3 ist ferner eine Feder 9, insbesondere Schenkelfeder, angeordnet, die sich mit ihrem einen Ende am zweiten Gehäuseteil 4.3 und mit ihrem anderen Ende am Durchflussmesskörper 6, hier an seinem Paddel 6.1, abstützt. Die Feder 9 beaufschlagt das Paddel 6.1 entgegen der Strömungsrichtung Y, die in dem zweiten Gehäuseteil 4.3 vorliegt, mit einer Vorspannung. Die Vorspannung ist so gewählt, dass das Paddel 6.1 im nicht-angeströmten Zustand in der Anfangsstellung gehalten und gegen einen Anschlag 4.333 gedrückt wird.

Wie insbesondere die Figuren 5a) und b) zeigen, ist im zweiten Gehäuseteil 4.3 ein Durchflussmesserströmungskanal 4.33 als Teil des Nebenströmungskanals 3 vorgesehen, der einen ersten, geraden Abschnitt 4.331 und einen daran angrenzenden zweiten, gebogenen Abschnitt 4.332 aufweist. Der Anschlag 4.333 befindet sich zwischen dem ersten Abschnitt 4.331 und dem zweiten Abschnitt 4.332. Im nicht-angeströmten Zustand befindet sich das Paddel, wie Fig. 5a) zeigt, am Anschlag 4.333, der die Anfangsstellung definiert. Mit zunehmender Anströmung bewegt sich das Paddel 6.1 um die zweite Drehachse x₂ des Durchflussmesskörpers 6 in Richtung der Endstellung (im vorliegenden Ausführungsbeispiel eine Bewegung im Uhrzeigersinn).

Wie insbesondere Fig. 6 erkennen lässt, erweitert sich der Querschnitt des Durchflussmesserströmungskanals 4.33 von der Anfangsstellung in Richtung der Endstellung, indem der Boden 4.334 des Durchflussmesserströmungskanals 4.33 eine schiefe Ebene bildet, also in Richtung zur Endstellung abfällt. Damit vergrößert sich ein Spalt zwischen Paddel 6.1 und Boden 4.334 mit zunehmendem Ausschlag des Paddels 6.1 in Richtung der Endstellung. Ein geringer, gleichmäßiger Spalt ist auch zwischen Paddel 6.1 und radial äußerer Wand 4.335 des Durchflussmesserströmungskanals 4.33 vorgesehen, was die Strömungsverhältnisse weiter optimiert.

Fig. 6 zeigt, wie die Scheibe 6.3 des Durchflussmesskörpers 6 den Durchflussmesserströmungskanal 4.33 in Richtung des Deckels 7 begrenzt und von einem Raum 4.34 trennt, in welchem sich der Zeiger 6.2 bewegt. Auf diese Weise wird verhindert, dass Schmutzpartikel aus dem strömenden Bereich, das heißt dem Durchflussmesserströmungskanal 4.33, in den Bereich, in dem sich der Zeiger 6.2 bewegt, das heißt den Raum 4.34, gelangen können und so diesen Raum 4.34 und insbesondere den transparenten und mit der Skala 8 versehenen Deckel 7 verschmutzen können. Auch wird verhindert, dass auf diese Weise Schmutz dazu führt, dass der Durchflussmesskörper 6 unbeabsichtigt festklemmt.

Wie bereits zuvor erläutert, zeigen die Figuren 7a) bis d) verschiedene Ausführungsbeispiele eines Durchflussmesskörpers 6. An dieser Stelle sei nochmals hervorgehoben, dass der Zeiger 6.2 als ein dreidimensionales Bauteil geformt sein kann (Fig. 7c)) oder aber von einer Markierung gebildet sein kann (Figuren 7a), b) und d)). Der Zeiger 6.2 ist dann durch den transparenten Bereich des Deckels 7 (Schauglas) sichtbar und zeigt auf der Skala 8 die Durchflussmenge an.

## Patentansprüche

1. Verteilerventil (1) mit integrierter Durchflussmesseinheit, welches einen von einem Medium in einer Hauptströmungsrichtung (X) durchströmbaren Hauptströmungskanal (2) und einen davon abzweigenden Nebenströmungskanal (3) aufweist,
- mit einem Verteilerventilgehäuse (4) enthaltend
- ein Hauptrohr (4.1) mit einem ersten Leitungsrohranschluss (4.11), einem zweiten Leitungsrohranschluss (4.12) und mindestens einem dazwischen liegenden Abzweig (4.13), wobei der Hauptströmungskanal (2) im Hauptrohr (4.1) vom ersten Leitungsrohranschluss (4.11) zum zweiten Leitungsrohranschluss (4.12) verläuft,
- einen ersten Gehäuseteil (4.2) zur Aufnahme mindestens eines Ventilkörpers (5), wobei der erste Gehäuseteil (4.2) eine Wand (4.22) mit einer einen Einlass (4.23) für das aus dem Hauptrohr (4.1) am Abzweig (4.13) abzweigbare Medium bildenden Öffnung (4.23) aufweist, wobei der Abzweig (4.13) in den ersten Gehäuseteil (4.2) mündet und eine Fluidverbindung zwischen dem Hauptrohr (4.1) und dem ersten Gehäuseteil (4.2) bildet und wobei der erste Gehäuseteil (4.2) einen Auslass (4.21) aufweist, und
- einen zweiten Gehäuseteil (4.3) zur Aufnahme eines Durchflussmesskörpers (6),
- mit dem Ventilkörper (5),
- mit dem Durchflussmesskörper (6) und
- mit einem dritten Leitungsrohranschluss (4.31),
- wobei der Auslass (4.21) des ersten Gehäuseteils (4.2) in den zweiten Gehäuseteil (4.3) mündet und eine Fluidverbindung zwischen dem ersten Gehäuseteil (4.2) und dem zweiten Gehäuseteil (4.3) bildet, **dadurch gekennzeichnet** - dass der zweite Gehäuseteil (4.3) einen Auslass (4.31) aufweist, der den dritten Leitungsrohranschluss (4.31) bildet,
- dass der Nebenströmungskanal (3) vom Abzweig (4.13) des Hauptrohrs (4.1) zum Auslass (4.31) des zweiten Gehäuseteils (4.3) verläuft,
und
- dass der Abzweig (4.13) des Hauptrohrs (4.1) von einer Öffnung (4.13) im Hauptrohr (4.1) gebildet wird, wobei die Öffnung (4.13) des Hauptrohrs (4.1) mit der den Einlass bildenden Öffnung (4.23) des ersten Gehäuseteils (4.2) übereinstimmt, oder
- dass der Abzweig (4.13) des Hauptrohrs (4.1) von einer Öffnung (4.13) im Hauptrohr (4.1) zusammen mit einem Leitungsstück gebildet wird, wobei das Leitungsstück zwischen der den Einlass bildenden Öffnung (4.23) des ersten Gehäuseteils (4.2) und der Öffnung (4.13) im Hauptrohr (4.1) als Verbindung zwischen Hauptrohr (4.1) und erstem Gehäuseteil (4.2) vorgesehen ist.

2. Verteilerventil (1) nach Anspruch 1, **dadurch gekennzeichnet, dass** das Verteilerventilgehäuse (4) einstückig ausgebildet ist.

3. Verteilerventil (1) nach Anspruch 1 oder 2, **dadurch gekennzeichnet, dass** im ersten Gehäuseteil (4.2) als Ventilkörper (5) ein Regulierküken (5) um eine erste Drehachse (x₁) zwischen einer Schließstellung und einer Offenstellung drehbar gelagert ist, wobei insbesondere die Wand (4.22) des ersten Gehäuseteils (4.2) innenseitig zumindest bereichsweise eine zylindrische Oberfläche aufweist, an der das Regulierküken (5) innenseitig anliegt und an der das Regulierküken (5) entlangführbar ist.

4. Verteilerventil (1) nach Anspruch 3, **dadurch gekennzeichnet, dass** das Regulierküken (5) einen Kükenkanal (5.1) aufweist, der sich von einer radialen Öffnung (5.2) im Regulierküken (5) zu einer axialen Öffnung (5.3) im Regulierküken (5) erstreckt, wobei in der Offenstellung des Regulierkükens (5) die axiale Öffnung (5.3) im Regulierküken (5) mit dem Auslass (4.21) des ersten Gehäuseteils (4.2) und die radiale Öffnung (5.2) im Regulierküken (5) mit dem Einlass (4.23) des ersten Gehäuseteils (4.2) fluchtet und wobei in der Schließstellung des Regulierungskükens (5) das Regulierküken (5) den Einlass (4.23) des ersten Gehäuseteils (4.2) vollständig verschließt, wobei insbesondere die radiale Öffnung (5.2) im Regulierküken (5) einen unrunden und/oder asymmetrischen Querschnitt hat, der sich insbesondere in Umfangsrichtung zu einer Seite stärker als zur anderen Seite verjüngt.

5. Verteilerventil (1) nach Anspruch 4, **dadurch gekennzeichnet, dass** sich der Querschnitt der radialen Öffnung (5.2) im Regulierküken (5) über mindestens ein Viertel des Umfangs des Regulierkükens (5), bevorzugt über mindestens ein Drittel des Umfangs des Regulierkükens (5), besonders bevorzugt über mindestens die Hälfte des Umfangs des Regulierungskükens (5), erstreckt.

6. Verteilerventil (1) nach einem der vorangehenden Ansprüche, **dadurch gekennzeichnet dass** der Durchflussmesskörper (6) im zweiten Gehäuseteil (4.3) um eine zweite Drehachse (x₂) zwischen einer Anfangsstellung und einer Endstellung drehbar gelagert ist, wobei insbesondere der Durchflussmesskörper (6) ein in den Nebenströmungskanal (3) ragendes Paddel (6.1) aufweist.

7. Verteilerventil (1) nach einem der vorangehenden Ansprüche, **dadurch gekennzeichnet, dass** der zweite Gehäuseteil (4.3) mit einer Aufnahme (4.32) für einen Deckel (7) versehen ist, wobei insbesondere der Deckel (7) und/oder der zweite Gehäuseteil (4.3) zumindest abschnittsweise transparent ist, wobei der transparente Bereich eine Skala (8) aufweist.

8. Verteilerventil (1) nach Anspruch 6 oder 7, **dadurch gekennzeichnet, dass** der Durchflussmesskörper (6) einen Zeiger (6.2) aufweist, der durch den transparenten und mit der Skala (8) versehenen Bereich des Deckels (7) und/oder des zweiten Gehäuseteils (4.3) sichtbar ist.

9. Verteilerventil (1) nach einem der Ansprüche 6 bis 8, **dadurch gekennzeichnet, dass** das Paddel (6.1) mit dem Zeiger (6.2) drehfest verbunden und insbesondere einstückig ausgeführt ist.

10. Verteilerventil (1) nach Anspruch 8 oder 9, **dadurch gekennzeichnet, dass** zwischen dem Paddel (6.1) und dem Zeiger (6.2) eine, insbesondere rotationssymmetrische, Scheibe (6.3) angeordnet ist, die insbesondere einstückig mit dem Paddel (6.1) und/oder dem Zeiger (6.2) ausgeführt ist.

11. Verteilerventil (1) nach einem der Ansprüche 6 bis 10, **dadurch gekennzeichnet, dass** im zweiten Gehäuseteil (4.3) eine Feder (9), insbesondere Schenkelfeder, angeordnet ist, die sich mit einem Ende am zweiten Gehäuseteil (4.3) und mit dem anderen Ende am Durchflussmesskörper (6), insbesondere am Paddel (6.1), abstützt und das Paddel (6.1) entgegen der Strömungsrichtung (Y) im zweiten Gehäuseteil (4.3) mit einer Vorspannung beaufschlagt, wobei insbesondere die Vorspannung so groß ist, dass das Paddel (6.1) im nicht-angeströmten Zustand in der Anfangsstellung gehalten wird.

12. Verteilerventil (1) nach einem der Ansprüche 6 bis 11, **dadurch gekennzeichnet, dass** der zweite Gehäuseteil (4.3) einen Durchflussmesserströmungskanal (4.33) aufweist, der einen ersten, insbesondere gerade, Abschnitt (4.331) und einen angrenzenden zweiten, gebogenen Abschnitt (4.332) aufweist, wobei das Paddel (6.1) in der Anfangsstellung des Durchflussmesskörpers (6) am Anfang des zweiten Abschnitts (4.332) angeordnet ist und im vom Medium angeströmten Zustand um die zweite Drehachse (x₂) im zweiten Abschnitt (4.332) in Richtung der Endstellung entlang bewegbar ist, wobei sich insbesondere der Querschnitt des Durchflussmesserströmungskanals (4.33) im zweiten Abschnitt (4.332) von der Anfangsstellung in Richtung der Endstellung erweitert.

13. Verteilerventil (1) nach Anspruch 12, **dadurch gekennzeichnet, dass** der Durchflussmesserströmungskanal (4.33) einen Anschlag (4.333) für das Paddel (6.1) und/oder den Zeiger (6.2) aufweist, der die Anfangsstellung definiert.

14. Verteilerventil (1) nach Anspruch 12 oder 13, **dadurch gekennzeichnet, dass** der Durchflussmesserströmungskanal (4.33) zur Aufnahme (4.32) des Deckels (7) hin von der Scheibe (6.3) des Durchflussmesskörpers (6) begrenzt wird.

15. Verteilerventil (1) nach einem der Ansprüche 6 bis 14, **dadurch gekennzeichnet, dass** die erste Drehachse (x₁) winkelig, insbesondere senkrecht, zur zweiten Drehachse (x₂) und/oder die erste Drehachse winkelig, insbesondere senkrecht, zur Hauptströmungsrichtung (X) im Hauptrohr (4.1) und/oder die zweite Drehachse (x₂) winkelig, insbesondere senkrecht, zur Hauptströmungsrichtung (X) im Hauptrohr (4.1) verläuft.

## Claims

1. A distributor valve (1) having an integrated flow meter unit, said distributor valve having a main flow channel (2), through which a medium can flow in a main flow direction (X), and a secondary flow channel (3) that branches off from said main flow channel,
- having a distributor valve housing (4) containing
- a main pipe (4.1) with a first pipeline connection (4.11), a second pipeline connection (4.12) and at least one branch (4.13) situated therebetween, the main flow channel (2) running in the main pipe (4.1) from the first pipeline connection (4.11) to the second pipeline connection (4.12),
- a first housing part (4.2) for accommodating at least one valve body (5), the first housing part (4.2) having a wall (4.22) with an opening (4.23), which forms an inlet (4.23) for the medium that can be branched off from the main pipe (4.1) at the branch (4.13), the branch (4.13) opening into the first housing part (4.2) and forming a fluid connection between the main pipe (4.1) and the first housing part (4.2), and the first housing part (4.2) having an outlet (4.21), and
- a second housing part (4.3) for accommodating a flow meter body (6),
- having the valve body (5),
- having the flow meter body (6) and
- having a third pipeline connection (4.31),
- the connection (4.21) of the first housing part (4.2) opening into the second housing part (4.3) and forming a fluid connection between the first housing part (4.2) and the second housing part (4.3),
**characterised in that**
- the second housing part (4.3) has an outlet (4.31), which forms the third pipeline connection (4.31),
- the secondary flow channel (3) runs from the branch (4.13) of the main pipe (4.1) to the outlet (4.31) of the second housing part (4.3), and
- the branch (4.13) of the main pipe (4.1) is formed by an opening (4.13) in the main pipe (4.1), wherein the opening (4.13) in the main pipe (4.1) corresponds with the opening (4.23) of the first housing part (4.2) that forms the inlet, or
- the branch (4.13) of the main pipe (4.1) is formed by an opening (4.13) in the main pipe (4.1) together with a pipeline piece, wherein the pipeline piece is provided between the opening (4.23) of the first housing part (4.2) that forms the inlet and the opening (4.13) in the main pipe (4.1) as a connection between the main pipe (4.1) and the first housing part (4.2).

2. The distributor valve (1) according to claim 1, **characterised in that** the distributor valve housing (4) is formed in one piece.

3. The distributor valve (1) according to claim 1 or 2, **characterised in that** a regulating plug (5) is mounted as the valve body (5) in the first housing part (4.2) such that said regulating plug can rotate about a first rotation axis (x₁) between a closed position and an open position, wherein in particular the wall (4.22) of the first housing part (4.2) has at least in some regions on the inside thereof a cylindrical surface, against the inside of which the regulating plug (5) bears and along which the regulating plug (5) can be guided.

4. The distributor valve (1) according to claim 3, **characterised in that** the regulating plug (5) has a plug channel (5.1), which extends from a radial opening (5.2) in the regulating plug (5) to an axial opening (5.3) in the regulating plug (5), wherein the axial opening (5.3) in the regulating plug (5) aligns with the outlet (4.21) of the first housing part (4.2) and the radial opening (5.2) in the regulating plug (5) aligns with the inlet (4.23) of the first housing part (4.2) when the regulating plug (5) is in the open position, and wherein the regulating plug (5) completely closes the inlet (4.23) of the first housing part (4.2) when the regulating plug (5) is in the closed position, wherein in particular the radial opening (5.2) in the regulating plug (5) has a non-round and/or asymmetrical cross section, which in particular tapers more to one side than the other side in the circumferential direction.

5. The distributor valve (1) according to claim 4, **characterised in that** the cross section of the radial opening (5.2) in the regulating plug (5) extends over at least a quarter of the circumference of the regulating plug (5), preferably over at least a third of the circumference of the regulating plug (5), particularly preferably over at least half the circumference of the regulating plug (5).

6. The distributor valve (1) according to any one of the preceding claims, **characterised in that** the flow meter body (6) is mounted in the second housing part (4.3) such that said flow meter body can rotate about a second rotation axis (x₂) between a start position and an end position, wherein in particular the flow meter body (6) has a paddle (6.1) that projects into the secondary flow channel (3).

7. The distributor valve (1) according to any one of the preceding claims, **characterised in that** the second housing part (4.3) is provided with a receptacle (4.32) for a cover (7), wherein in particular the cover (7) and/or the second housing part (4.3) is at least in some sections transparent, wherein the transparent region has a scale (8).

8. The distributor valve (1) according to claim 6 or 7, **characterised in that** the flow meter body (6) has a pointer (6.2), which is visible through the transparent region of the cover (7) and/or of the second housing part (4.3) that is provided with the scale (8).

9. The distributor valve (1) according to any one of claims 6 to 8, **characterised in that** the paddle (6.1) is connected for conjoint rotation to the pointer (6.2) and is in particular formed in one piece.

10. The distributor valve (1) according to claim 8 or 9, **characterised in that** a disc (6.3) is arranged between the paddle (6.1) and the pointer (6.2), said disc being in particular rotationally symmetrical and in particular being integrally formed with the paddle (6.1) and/or the pointer (6.2).

11. The distributor valve (1) according to any one of claims 6 to 10, **characterised in that** a spring (9), in particular a leg spring, is arranged in the second housing part (4.3), said spring being supported at one end on the second housing part (4.3) and at the other end on the flow meter body (6), in particular on the paddle (6.1), and loading the paddle (6.1) with a pre-stress counter to the flow direction (Y) in the second housing part (4.3), wherein in particular the pre-stress is so great that the paddle (6.1) is held in the start position when no flow is flowing against it.

12. The distributor valve (1) according to any one of claims 6 to 11, **characterised in that** the second housing part (4.3) has a flow meter flow channel (4.33), which has a first section (4.331), which is in particular straight, and an adjacent second, curved section (4.332), wherein the paddle (6.1) is arranged at the start of the second section (4.332) when the flow meter body (6) is in the start position and can be moved about the second rotation axis (x₂) in the second section (4.332) in the direction of the end position when medium flows against it, wherein in particular the cross section of the flow meter flow channel (4.33) in the second section (4.332) widens from the start position in the direction of the end position.

13. The distributor valve (1) according to claim 12, **characterised in that** the flow meter flow channel (4.33) has a stop (4.333) for the paddle (6.1) and/or pointer (6.2), said stop defining the start position.

14. The distributor valve (1) according to claim 12 or 13, **characterised in that** the flow meter flow channel (4.33) is delimited towards the receptacle (4.32) of the cover (7) by the disc (6.3) of the flow meter body (6).

15. The distributor valve (1) according to any one of claims 6 to 14, **characterised in that** the first rotation axis (x₁) runs at an angle, in particular perpendicularly, to the second rotation axis (x₂) and/or the first rotation axis runs at an angle, in particular perpendicularly, to the main flow direction (X) in the main pipe (4.1) and/or the second rotation axis (x₂) runs at an angle, in particular perpendicularly, to the main flow direction (X) in the main pipe (4.1).

## Revendications

1. Vanne distributrice (1) à unité débitmétrique intégrée, laquelle comporte un canal d'écoulement (2) principal susceptible d'être traversé par un fluide dans une direction principale (X) d'écoulement et un canal d'écoulement (3) secondaire qui dérive de celui-ci,
- avec une cage (4) de vanne distributrice, contenant
- un tube principal (4.1) avec un premier raccord (4.11) de conduit, un deuxième raccord (4.12) de conduit et au moins une dérivation (4.13) intercalée, le canal d'écoulement (2) principal dans le tube principal (4.1) s'écoulant du premier raccord (4.11) de conduit jusqu'au deuxième raccord (4.12) de conduit,
- une première partie (4.2) de cage destinée à recevoir au moins un corps de vanne (5), la première partie (4.2) de cage comportant une paroi (4.22) avec un orifice (4.23) formant une entrée (4.23) pour le fluide susceptible de dériver hors du tube principal (4.1) sur la dérivation (4.13), la dérivation (4.13) débouchant dans la première partie (4.2) de cage et formant une liaison par fluide entre le tube principal (4.1) et la première partie (4.2) de cage et la première partie (4.2) de cage comportant une sortie (4.21) et
- une deuxième partie (4.3) de cage, destinée à recevoir un organe débitmétrique (6),
- avec le corps de vanne (5),
- avec l'organe débitmétrique (6) et
- avec un troisième raccord (4.31) de conduit,
- la sortie (4.21) de la première partie (4.2) de cage débouchant dans la deuxième partie (4.3) de cage et formant une liaison par fluide entre la première partie (4.2) de cage et la deuxième partie (4.3) de cage,
**caractérisée en ce que**
- la deuxième partie (4.3) de cage comporte une sortie (4.31) qui forme le troisième raccord (4.31) de conduit,
- le canal secondaire (3) d'écoulement s'écoule de la dérivation (4.13) du tube principal (4.1) vers la sortie (4.31) de la deuxième partie (4.3) de cage,
et
- la dérivation (4.13) du tube principal (4.1) est formée par un orifice (4.13) dans le tube principal (4.1), l'orifice (4.13) du tube principal (4.1) coïncidant avec l'orifice (4.23) formant l'entrée de la première partie (4.2) de boîtier, ou
- la dérivation (4.13) du tube principal (4.1) est formée par un orifice (4.13) dans le tube principal (4.1) associé avec une pièce de conduit, la pièce de conduit étant prévue entre l'orifice (4.23) formant l'entrée de la première partie (4.2) de cage et l'orifice (4.13) dans le tube principal (4.1) en tant que liaison entre le tube principal (4.1) et la première partie (4.2) de cage.

2. Vanne distributrice (1) selon la revendication 1, **caractérisée en ce que** la cage (4) de vanne distributrice est conçue en monobloc.

3. Vanne distributrice (1) selon la revendication 1 ou 2, **caractérisée en ce que** dans la première partie (4.2) de cage, en tant que corps de vanne (5), un boisseau de régulation (5) est logé en rotation autour d'un premier axe de rotation (x₁), entre une position de fermeture et une position d'ouverture, notamment sur sa face intérieure, la paroi (4.22) de la première partie (4.2) de cage comportant au moins par zones une surface cylindrique sur laquelle le boisseau de régulation (5) est adjacent avec la face intérieure et le long de laquelle le boisseau de régulation (5) peut être conduit.

4. Vanne distributrice (1) selon la revendication 3, **caractérisée en ce que** le boisseau de régulation (5) comporte un canal (5.1) de boisseau qui s'étend d'un orifice radial (5.2) dans le boisseau de régulation (5) vers un orifice axial (5.3) dans le boisseau de régulation (5), dans la position d'ouverture du boisseau de régulation (5), l'orifice axial (5.3) dans le boisseau de régulation (5) étant aligné sur la sortie (4.21) de la première partie (4.2) de cage et l'orifice radial (5.2) dans le boisseau de régulation (5) étant aligné sur l'entrée (4.23) de la première partie (4.2) de cage, et dans la position de fermeture du boisseau de régulation (5), le boisseau de régulation (5) fermant complètement l'entrée (4.23) de la première partie (4.2) de cage, notamment l'orifice radial (5.2) dans le boisseau de régulation (5) ayant une section transversale ovalisée et/ou asymétrique, qui se rétrécit notamment dans la direction périphérique de manière plus marquée vers un côté que vers l'autre côté.

5. Vanne distributrice (1) selon la revendication 4, **caractérisée en ce que** la section transversale de l'orifice radial (5.2) dans le boisseau de régulation (5) s'étend sur au moins un quart de la périphérie du boisseau de régulation (5), de préférence sur au moins un tiers de la périphérie du boisseau de régulation (5), de manière particulièrement préférée sur au moins la moitié de la périphérie du boisseau de régulation (5).

6. Vanne distributrice (1) selon l'une quelconque des revendications précédentes, **caractérisée en ce que** dans la deuxième partie (4.3) de cage l'organe débitmétrique (6) est logé en rotation autour d'un deuxième axe de rotation (x₂), entre une position initiale et une position finale, notamment l'organe débitmétrique (6) comportant une palette (6.1) saillant dans le canal secondaire (3) d'écoulement.

7. Vanne distributrice (1) selon l'une quelconque des revendications précédentes, **caractérisée en ce que** la deuxième partie (4.3) de cage est munie d'un logement (4.32) pour un couvercle (7), notamment le couvercle (7) et/ou la deuxième partie (4.3) de cage étant transparent(e) au moins par sections, la zone transparente comportant une graduation (8).

8. Vanne distributrice (1) selon la revendication 6 ou 7, **caractérisée en ce que** l'organe débitmétrique (6) comporte une aiguille (6.2) qui est visible à travers la zone transparente et munie de la graduation (8) du couvercle et/ou de la deuxième partie (4.3) de cage (7).

9. Vanne distributrice (1) selon l'une quelconque des revendications 6 à 8, **caractérisée en ce que** la palette (6.1) est reliée de manière solidaire en rotation et est notamment réalisée en monobloc avec l'aiguille (6.2).

10. Vanne distributrice (1) selon la revendication 8 ou 9, **caractérisée en ce qu'**entre la palette (6.1) et l'aiguille (6.2) est placé un disque (6.3), notamment symétrique en rotation, qui est réalisé notamment en monobloc avec la palette (6.1) et/ou l'aiguille (6.2).

11. Vanne distributrice (1) selon l'une quelconque des revendications 6 à 10, **caractérisée en ce que** dans la deuxième partie (4.3) de cage est placé un ressort (9), notamment un ressort à branches, qui par une extrémité s'appuie sur la deuxième partie (4.3) de cage et par l'autre extrémité s'appuie sur l'organe débitmétrique (6), notamment sur la palette (6.1), et contraint la palette (6.1) avec une précontrainte à l'encontre de la direction d'écoulement (Y) dans la deuxième partie (4.3) de cage, notamment la précontrainte étant si élevée qu'en position sans affluence, la palette (6.1) soit maintenue en position initiale.

12. Vanne distributrice (1) selon l'une quelconque des revendications 6 à 11, **caractérisée en ce que** la deuxième partie (4.3) de cage comporte un canal d'écoulement (4.33) de débitmètre qui comporte un premier tronçon (4.331) notamment rectiligne et un deuxième tronçon (4.332) adjacent recourbé, dans la position initiale de l'organe débitmétrique (6), la palette (6.1) étant placée au début du deuxième tronçon (4.332) et dans la position sous affluence de fluide, étant mobile autour du deuxième axe de rotation (x₂) dans le deuxième tronçon (4.332), le long de la direction de la position finale, notamment la section transversale du canal d'écoulement (4.33) de débitmètre dans le deuxième tronçon (4.332) s'élargissant de la position initiale en direction de la position finale.

13. Vanne distributrice (1) selon la revendication 12, **caractérisée en ce que** le canal d'écoulement (4.33) de débitmètre comporte une butée (4.333) pour la palette (6.1) et/ou l'aiguille (6.2) qui définit la position initiale.

14. Vanne distributrice (1) selon la revendication 12 ou 13, **caractérisée en ce que** le canal d'écoulement (4.33) de débitmètre est délimité vers le logement (4.32) du couvercle (7) par le disque (6.3) de l'organe débitmétrique (6).

15. Vanne distributrice (1) selon l'une quelconque des revendications 6 à 14, **caractérisée en ce que** le premier axe de rotation (x₁) s'écoule sous un angle, notamment à la perpendiculaire, vers le deuxième axe de rotation (x₂) et/ou **en ce que** le premier axe de rotation s'étend sous un angle, notamment à la perpendiculaire, de la direction principale (X) d'écoulement dans le tube principal (4.1) et/ou le deuxième axe de rotation (x₂) s'écoule avec un angle, notamment à la perpendiculaire, de la direction principale (X) d'écoulement dans le tube principal (4.1).
